# EUROPÄISCHE PATENTSCHRIFT

(11) **EP 2 184 029 B1**
(45) Veröffentlichungstag und Bekanntmachung des Hinweises auf die Patenterteilung: **03.04.2013**
(21) Anmeldenummer: 09170656.4
(22) Anmeldetag: 18.09.2009
(51) Int. Cl.: A61C 7/10

(54) **Dehnschraube zur Zahnregulierung**
Orthodontic expansion screw
Vis d'extension orthodontique

(30) Priorität: 06.11.2008 DE 102008057224
(43) Veröffentlichungstag der Anmeldung: 12.05.2010
(73) Patentinhaber: DENTAURUM GmbH & Co. KG, 75228 Ispringen (DE)
(72) Erfinder: Ehrenberger, Walter, 75236 Kämpfelbach (DE); Trautwein, Simon, 76356 Weingarten (DE)
(74) Vertreter: Boehme, Ulrich

(56) Entgegenhaltungen:
- WO-A1-03/071976
- DE-A1-102007 002 040
- FR-A- 1 150 055
- FR-A5- 2 169 540
- FR-A5- 2 193 322
- US-A- 5 281 133
- US-A1- 2007 275 341

## Beschreibung

Die Erfindung betrifft eine Dehnschraube zur Zahnregulierung, mit zwei Dehnschraubenkörpern, deren gegenseitiger Abstand mittels einer Spindel veränderbar ist, und mit mindestens einem parallel zur Spindel ausgerichteten Führungsstift, der in Führungsöffnungen der beiden Dehnschraubenkörpern eingreift, wobei die Spindel einen ersten und einen zweiten Gewindeabschnitt aufweist, die jeweils mit einem Dehnschraubenkörper verbunden sind, sowie einen Betätigungsabschnitt mit mindestens einer Ansetzstelle für ein Werkzeug zum Drehen der Spindel, und wobei die Dehnschraube einen Sperrmechanismus aufweist, der mit dem Betätigungsabschnitt zusammenwirkt zur Sicherung der Spindel gegen unbeabsichtigtes Verdrehen.

Eine derartige Dehnschraube ist aus der Offenlegungsschrift DE 10 2007 002 040 A1 bekannt. Durch Drehen der Spindel kann der Abstand, den die beiden Dehnschraubenkörper zueinander einnehmen, verändert werden, und mittels des Sperrmechanismus ist sichergestellt, dass sich die Spindel nicht selbsttätig verstellt. Als Sperrmechanismus kommt bei der bekannten Dehnschraube ein Metallband zum Einsatz, das sich quer zur Längsachse der Spindel über die Spindel erstreckt und an den Führungsstiften befestigt ist. Es liegt auf dem Außenumfang des Betätigungsabschnitts auf und wirkt als Reibungsbremse, die ein Drehen der Spindel erschwert. Der Betätigungsabschnitt weist einen von der Kreisform abweichenden Außenquerschnitt auf, so dass die vom Metallband erzeugte Reibungskraft von der Drehwinkelstellung der Spindel abhängt. Dadurch kann die Spindel gegen unbeabsichtigtes Verdrehen gesichert werden, allerdings weist die Dehnschraube ein nicht unbeachtliches Einbaumaß auf.

Aufgabe der vorliegenden Erfindung ist es, eine Dehnschraube der eingangs genannten Art derart weiterzubilden, dass sie ein möglichst geringes Einbaumaß aufweist.

Diese Aufgabe wird bei einer Dehnschraube der gattungsgemäßen Art erfindungsgemäß dadurch gelöst, dass der Sperrmechanismus mindestens ein Sperrelement aufweist mit einem seitlich neben dem Betätigungsabschnitt angeordneten Sperrglied, das den Betätigungsabschnitt beim Verdrehen der Spindel mit einer axial aufgerichteten Federkraft beaufschlagt. Durch die Einwirkung des seitlich neben dem Betätigungsabschnitt angeordneten Sperrglieds wird der Betätigungsabschnitt und damit auch die gesamte Spindel an einem unbeabsichtigten Verdrehen gehindert. Das Sperrglied ist hierbei seitlich neben dem Betätigungsabschnitt, bezogen auf die Axialrichtung der Spindel also an einer Stirnseite des Betätigungsabschnitts angeordnet. Dadurch kann die Dehnschraube mit sehr geringem Einbaumaß hergestellt werden und der Außenumfang des Betätigungsabschnittes ist sowohl auf der Oberseite als auch auf der Unterseite der Dehnschraube leicht zugänglich, so dass die Dehnschraube unabhängig von ihrer Lage im Mund eines Patienten auf einfache Weise betätigt werden kann.

Von Vorteil ist es, wenn das Sperrglied mindestens ein Rastelement aufweist, das in mindestens einer Winkelstellung der Spindel mit einem an einer Stirnseite des Betätigungsabschnitts angeordneten korrespondierenden Rastelement verrastbar ist. Dies gib die Möglichkeit, die Spindel stufenweise zu arretieren, indem die Spindel eine derartige Winkelstellung einnimmt, dass das am Sperrglied angeordnete Rastelement mit einem korrespondierenden Rastelement, welches an der Stirnseite des Betätigungsabschnittes angeordnet ist, zur Herstellung einer Rastverbindung zusammenwirkt.

Es kann vorgesehen sein, dass an mindestens einer Stirnseite des Betätigungsabschnitts mehrere, in gleichmäßigem Winkelabstand zueinander angeordnete Rastelemente angeordnet sind. Beispielsweise kann vorgesehen sein, dass an mindestens einer Stirnseite des Betätigungsabschnitts insgesamt vier Rastelemente angeordnet sind, jeweils in einem Winkelabstand von 90° zueinander, so dass der Betätigungsabschnitt jeweils nach einer viertel Drehung mittels der miteinander zusammenwirkenden Rastelemente arretiert werden kann.

Bevorzugt ist das mindestens eine Rastelement des Sperrglieds als Rastvorsprung und das mindestens eine Rastelement des Betätigungsabschnitts als stirnseitig angeordnete Rastvertiefung ausgestaltet, in die der Rastvorsprung des Sperrglieds eintaucht. Selbstverständlich ist auch eine komplementäre Ausgestaltung denkbar dergestalt, dass an der Stirnseite des Betätigungsabschnitts mindestens ein Rastvorsprung angeordnet ist, der mit einer Rastvertiefung des Sperrglieds zusammenwirkt. In jedem Falle kann durch die Bereitstellung von mindestens einem Rastvorsprung und einer korrespondierenden Rastvertiefung auf konstruktiv einfache Weise eine stufenweise Arretierung der Spindel erzielt werden.

Von Vorteil ist es, wenn das mindestens eine Rastelement des Sperrglieds mit dem mindestens einen Rastelement des Betätigungsabschnitts einen Formschluss ausbildet. Durch die Bereitstellung eines Formschlusses kann eine besonders effektive Sperrwirkung erzielt werden, die die Spindel gegen ein unbeabsichtigtes Verdrehen sichert.

Ein besonders geringes Einbaumaß wird bei einer vorteilhaften Ausgestaltung der erfindungsgemäßen Dehnschraube dadurch erzielt, dass das Sperrelement aus einem Flachmaterial gefertigt ist.

Insbesondere kann vorgesehen sein, dass das Sperrelement aus Blech gefertigt ist. Beim Drehen der Spindel kann das Flachmaterial, insbesondere das Blech, so weit elastisch verformt werden, dass die Spindel durch Ansetzen eines Werkzeuges, beispielsweise eines Stiftes, auf einfache Weise gedreht werden kann, wobei die Spindel jedoch aufgrund der vom Flachmaterial ausgeübten Federkraft an einem unbeabsichtigten Verdrehen gehindert ist.

Um das Sperrelement in axialer Richtung an der Spindel festzulegen, ist bei einer vorteilhaften Ausführungsform vorgesehen, dass die Spindel seitlich neben dem Betätigungsabschnitt eine Ringnut aufweist, in die das Sperrelement eintaucht.

Von Vorteil ist es im Hinblick auf eine einfache Montage und axiale Festlegung des Sperrelements an der Spindel, wenn das Sperrelement mit der Spindel verrastbar ist.

Das Sperrelement weist bevorzugt einen U-förmigen oder C-förmigen Bügel auf, der die Spindel zwischen sich aufnimmt. Insbesondere kann vorgesehen sein, dass der Bügel in die Ringnut eintaucht. Vorzugsweise rastet die Ringnut in den Bügel ein.

Günstigerweise umfasst das Sperrelement mindestens einen vom Sperrglied nach außen abstehenden Haltearm, der an einem Führungsstift gehalten ist.

Es kann vorgesehen sein, dass der mindestens eine Haltearm eine Öffnung aufweist, die von einem Führungsstift durchgriffen ist. Die Öffnung kann beispielsweise in Form einer Ausstanzung gebildet sein.

Bevorzugt ist der mindestens eine Haltearm an einem Führungsstift axial unbeweglich fixiert. Insbesondere kann vorgesehen sein, dass der Haltearm mit dem Führungsstift stoffschlüssig verbunden ist, beispielsweise verschweißt oder verklebt ist.

Bei einer besonders bevorzugten Ausführungsform der erfindungsgemäßen Dehnschraube weist diese zwei Führungsstifte auf, zwischen denen die Spindel angeordnet ist, und das Sperrglied bildet einen Mittelabschnitt des Sperrelements aus, der an der Spindel angeordnet ist und den Betätigungsabschnitt beim Verdrehen der Spindel mit einer axialen Federkraft beaufschlagt, wobei das Sperrelement einander abgewandte erste und zweite Haltearme aufweist, die sich an den Mittelabschnitt anschließen und jeweils unverlierbar an einem Führungsstift gehalten sind. Die Haltearme können mit dem jeweiligen Führungsstift beispielsweise verschweißt oder verklebt sein.

Günstigerweise sind die beiden Haltearme jeweils L-förmig ausgestaltet und umfassen einen ersten, axial ausgerichteten Schenkel und einen zweiten, radial ausgerichteten Schenkel. Der axial ausgerichtete Schenkel verläuft parallel zur Längsachse der Spindel, und der radial ausgerichtete Schenkel verläuft senkrecht zur Längsachse der Spindel. Die radial ausgerichteten Schenkel können jeweils an einem Führungsstift fixiert sein. Hierzu können sie jeweils eine Öffnung aufweisen, die vom jeweiligen Führungsstift durchgriffen wird.

Eine besonders zuverlässige Sicherung der Spindel gegen unbeabsichtigtes Verdrehen wird bei einer vorteilhaften Ausführungsform dadurch erzielt, dass der Sperrmechanismus zwei Sperrelemente aufweist, deren Sperrglieder jeweils seitlich an einer Stirnseite des Betätigungsabschnitts angeordnet sind und den Betätigungsabschnitt beim Verdrehen der Spindel jeweils mit einer axialen Federkraft beaufschlagen.

Bevorzugt sind die beiden Sperrelemente spiegelsymmetrisch zueinander ausgestaltet.

Eine besonders kompakte Bauform ist bei einer vorteilhaften Ausführungsform dadurch sichergestellt, dass die beiden Sperrelemente den Betätigungsabschnitt in der Draufsicht vollständig umgeben. Die beiden Sperrelemente können hierzu jeweils ein an einer Stirnseite des Betätigungsabschnitts angeordnetes Sperrglied sowie zwei L-förmige Haltearme aufweisen. Die axial ausgerichteten Schenkel der Haltearme bilden zusammen mit dem Sperrglied eine U-Form, die den Betätigungsabschnitt zur Hälfte aufnimmt, und durch die Bereitstellung zweier Sperrelemente ist der Betätigungsabschnitt vollständig von Teilen der Sperrelemente umgeben.

Insbesondere bei Einsatz von zwei Sperrelementen, die den Betätigungsabschnitt der Spindel zwischen sich aufnehmen, ist es von Vorteil, wenn die beiden Sperrelemente jeweils eine zentrale Durchgangsöffnung aufweisen, die von der Spindel durchgriffen ist, und wenn die Sperrelemente jeweils an mindestens einem Führungsstift festgelegt sind.

Insbesondere kann die Dehnschraube zwei Führungsstifte aufweisen, zwischen denen die Spindel angeordnet ist, und die beiden Sperrelemente können in ihren Endbereichen jeweils eine Öffnung aufweisen, die von einem Führungsstift durchgriffen ist, und in einem mittigen Bereich können die Sperrelemente jeweils eine zentrale Durchgangsöffnung aufweisen, die von der Spindel durchgriffen ist. Bevorzugt sind die Sperrelemente an ihren endseitigen Öffnungen mit den Führungsstiften verschweißt. Da die Sperrelemente den Betätigungsabschnitt zwischen sich aufnehmen, ist auch eine axial unverschiebliche Anordnung der Sperrelemente an der die zentralen Durchgangsöffnungen durchgreifenden Spindel sichergestellt, ohne dass eine Schnapp- oder Rastverbindung zwischen den Sperrelementen und der Spindel zum Einsatz kommen muss. Zur Montage der Sperrelemente ist es ausreichend, sie in einander entgegengesetzten Richtungen auf die Führungsstifte und die Spindel aufzuschieben, bis sie jeweils an einer Stirnseite des Betätigungsabschnitts anliegen, und anschließend können sie mit den Führungsstiften stoffschlüssig verbunden, insbesondere verschweißt werden.

Die nachfolgende Beschreibung bevorzugter Ausführungsformen der Erfindung dient im Zusammenhang mit der Zeichnung der näheren Erläuterung. Es zeigen:
- Figur 1:: eine perspektivische Darstellung einer ersten Ausführungsform einer erfindungsgemäßen Dehnschraube;
- Figur 2:: eine Längsschnittansicht der Dehnschraube aus Figur 1;
- Figur 3:: eine perspektivische Darstellung eines Sperrelements der Dehnschraube aus Figur 1;
- Figur 4:: eine perspektivische Darstellung einer zweiten Ausführungsform einer erfindungsgemäßen Dehnschraube;
- Figur 5:: eine Längsschnittansicht der Dehnschraube aus Figur 3, und
- Figur 6:: eine perspektivische Darstellung eines Sperrelements der Dehnschraube aus Figur 4.

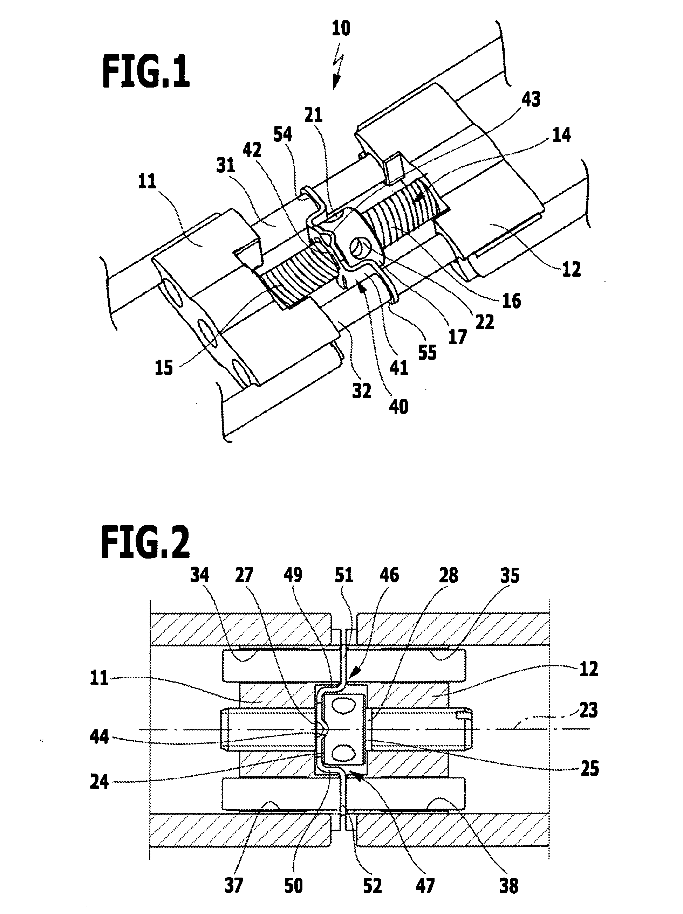

In den Figuren 1, 2 und 3 ist eine erste Ausführungsform einer erfindungsgemäßen Dehnschraube dargestellt, die insgesamt mit dem Bezugszeichen 10 belegt ist. Sie umfasst einen ersten Dehnschraubenkörper 11 und einen zweiten Dehnschraubenkörper 12, die über eine Spindel 14 miteinander verbunden sind. Die Spindel 14 weist einen ersten Gewindeabschnitt 15 und einen zweiten Gewindeabschnitt 16 auf, zwischen denen ein verbreiterter Betätigungsabschnitt 17 angeordnet ist. Die beiden Gewindeabschnitte 15 und 16 weisen jeweils ein Außengewinde auf mit einander entgegengesetztem Drehsinn. Die Gewindeabschnitte 15 und 16 tauchen jeweils in eine Bohrung mit passendem Innengewinde der Dehnschraubenkörper 11 bzw. 12 ein.

Der Betätigungsabschnitt 17 ist kreiszylindrisch ausgebildet und weist zwei um 90° zueinander versetzt angeordnete Durchgangsbohrungen 21, 22 auf, die jeweils eine Ansetzstelle für ein stiftförmiges Werkzeug zum Drehen der Spindel 14 ausbilden. Mit seinem in radialer Richtung bezogen auf die Längsachse 23 der Spindel 14 über die Gewindeabschnitte 15 und 16 hervorstehenden Bereich bildet der Betätigungsabschnitt 17 eine erste Stirnseite 24, die dem ersten Dehnschraubenkörper 11 zugewandt ist, und eine zweite Stirnseite 25, die dem zweiten Dehnschraubenkörper 12 zugewandt ist. Unmittelbar angrenzend an die Stirnseiten 24 und 25 weisen die Gewindeabschnitte 15 und 16 eine erste Ringnut 27 bzw. eine zweite Ringnut 28 auf.

Parallel zur Spindel 14 verlaufen ein erster Führungsstift 31 und ein zweiter Führungsstift 32, zwischen denen die Spindel 14 angeordnet ist. Mit seinen Endbereichen taucht der erste Führungsstift 31 in Führungsöffnungen 34 und 35 des ersten Dehnschraubenkörpers 11 bzw. des zweiten Dehnschraubenkörpers 12, und der zweite Führungsstift 32 taucht mit seinen Endbereichen in entsprechende Führungsöffnungen 37 und 38 der beiden Dehnschraubenkörper 11 und 12. Die Führungsstifte 31 und 32 sind bei der dargestellten Ausführungsform kreiszylindrisch ausgebildet, sie könnten aber auch einen anderen Querschnitt aufweisen, das heißt sie könnten auch prismatisch gestaltet sein.

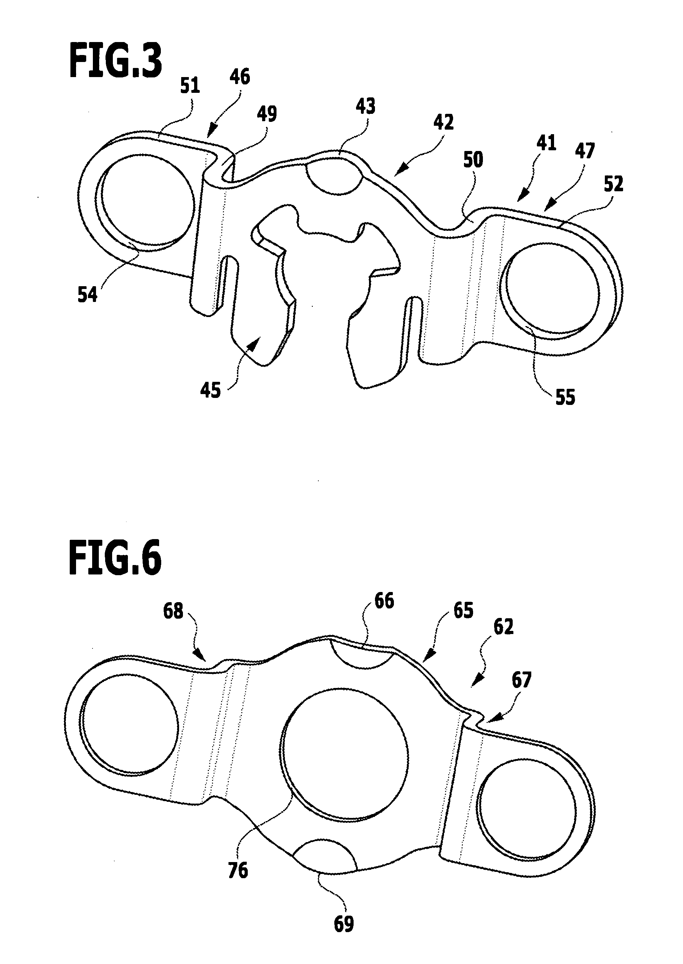

Durch Drehen der Spindel 14 mittels eines geeigneten Werkzeugs, das am Betätigungsabschnitt 17 angreift, kann der Abstand, den die beiden Dehnschraubenkörper 11 und 12 zueinander einnehmen, verändert werden. Um ein unbeabsichtigtes Verdrehen der Spindel 14 zu vermeiden, weist die Dehnschraube 10 einen Sperrmechanismus 40 auf mit einem einzigen Sperrelement 41, das als gebogenes und gestanztes Blechteil ausgebildet ist. Das Sperrelement 41 ist in Figur 3 vergrößert dargestellt. Es weist einen Mittelabschnitt auf, der ein Sperrglied 42 ausbildet, das an der ersten Stirnseite 24 des Betätigungsabschnitts 17 anliegt. Es ist im Wesentlichen U-förmig ausgestaltet und bildet einen Rastbügel 45 aus, in den die erste Ringnut 27 einrastet. In der Mitte, oberhalb des Rastbügels 45, weist das Sperrglied 42 einen Rastvorsprung 43 auf, der in der in den Figuren 1 und 2 dargestellten Winkelstellung der Spindel 14 in eine komplementär ausgebildete Rastvertiefung 44 des Betätigungsabschnitts 17 formschlüssig eintaucht. Die Rastvertiefung 44 ist an der ersten Stirnseite 24 angeordnet. Der Rastvorsprung 43 weist ebenso wie die Rastvertiefung 44 eine bogenförmige Kontur auf, so dass die Spindel 14 mittels eines geeigneten Werkzeuges ohne Weiteres aus der in den Figuren 1 und 2 dargestellten Winkelstellung verdreht werden kann, wobei dann das Sperrglied 42 im Bereich des Rastvorsprungs 43 elastisch in die der ersten Stirnseite 24 abgewandte Richtung verformt wird und dadurch die erste Stirnseite 24 des Betätigungsabschnitts 17 mit einer elastischen Federkraft beaufschlagt. Die Spindel 14 ist somit mittels des Sperrgliedes 42 gegen unbeabsichtigtes Verdrehen gesichert.

Wie bereits erläutert, bietet das Sperrglied 42 den Mittelabschnitt des flächigen Sperrelements 41 aus. An das Sperrglied 42 schließt sich in Richtung des ersten Führungsstiftes 31 ein erster Haltearm 46 an und in Richtung des zweiten Führungsstiftes 32 schließt sich an das Sperrglied 42 ein zweiter Haltearm 47 an. Die beiden Haltearme sind jeweils L-förmig gebogen und umfassen einen ersten Schenkel 49 bzw. 50, der parallel zur Längsachse 43 der Spindel 14 verläuft, sowie einen zweiten Schenkel 51 bzw. 52, der senkrecht zur Längsachse 43 verläuft. Die beiden zweiten Schenkel 51 und 52 weisen jeweils eine Öffnung in Form einer kreisförmigen Ausstanzung 54 bzw. 55 auf, die vom jeweiligen Führungsstift 31 bzw. 32 durchgriffen wird. Im Bereich der Ausstanzungen 54 bzw. 55 sind die Haltearme 46 und 47 jeweils mit einem Führungsstift 31 bzw. 32 stoffschlüssig verbunden. In der dargestellten Ausführungsform sind sie mit dem jeweiligen Führungsstift 31 bzw. 32 verschweißt. Die Schweißverbindung stellt sicher, dass das Sperrelement 41 unverlierbar an den Führungsstiften 31, 32 gehalten ist.

Die Anordnung des Sperrgliedes 42 seitlich neben der ersten Stirnseite 24 des Betätigungsabschnitts 17 bewirkt, dass die Spindel 14 zuverlässig gegen unbeabsichtigtes Verdrehen gesichert werden kann, ohne dass dadurch die Dehnschraube 10 ein großes Einbaumaß erhält. Die Dehnschraube 10 weist vielmehr ein verhältnismäßig geringes Einbaumaß auf, und dennoch ist sichergestellt, dass die Spindel 14 nur durch Überwinden einer axial auf den Betätigungsabschnitt 17 einwirkenden Federkraft verdreht werden kann.

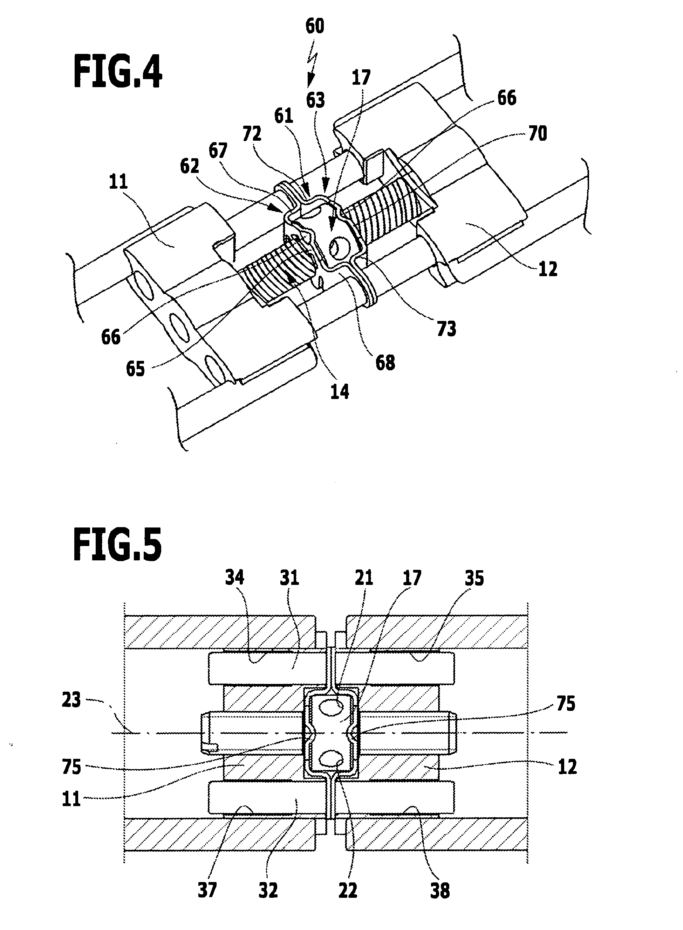

In den Figuren 4, 5 und 6 ist eine zweite Ausführungsform einer erfindungsgemäßen Dehnschraube dargestellt, die insgesamt mit dem Bezugszeichen 60 belegt ist. Diese ist weitgehend identisch ausgestaltet wie die voranstehend unter Bezugnahme auf die Figuren 1, 2 und 3 erläuterte Dehnschraube 10. Für identische Bauteile werden daher in den Figuren 4, 5 und 6 dieselben Bezugszeichen verwendet wie in den Figuren 1, 2 und 3. Bezüglich dieser Bezugszeichen wird zur Vermeidung von Wiederholungen auf die voranstehenden Erläuterungen Bezug genommen.

Die Dehnschraube 60 unterscheidet sich von der Dehnschraube 10 dadurch, dass ein Sperrmechanismus 61 zum Einsatz kommt mit zwei Sperrelementen 62 und 63, die die Spindel 14 der Dehnschraube 60 gegen unbeabsichtigtes Verdrehen sichern. Das Sperrelement 62 ist in Figur 6 vergrößert dargestellt. Es ist weitgehend identisch ausgebildet wie das voranstehend erläuterte Sperrelement 41. Es umfasst ein an der ersten Stirnseite 24 des Betätigungsabschnitts 17 angeordnetes Sperrglied 65 sowie einen ersten Haltearm 67 und einen zweiten Haltearm 68, die L-förmig gebogen sind und an ihren freien Endbereichen jeweils eine Ausstanzung aufweisen, die von einem Führungsstift 31 bzw. 32 durchgriffen ist. Im Bereich der Ausstanzungen sind die Haltearme 67 und 68 mit dem jeweiligen Führungsstift 31 bzw. 32 verschweißt. Im Unterschied zum Sperrelement 41 weist das Sperrglied 65 beim Sperrelement 62 keinen Rastbügel auf, in den die Spindel 14 mit einer Ringnut einrastet, sondern das Sperrglied 65 umfasst eine zentrale Durchgangsöffnung 76, die von der Spindel 14 der Dehnschraube 60 durchgriffen wird. Dadurch kann das Sperrelement 62 in axialer Richtung auf die Spindel 14 aufgeschoben werden. Außerdem ermöglicht es die Durchgangsöffnung 76, das Sperrglied 65 mit zwei Rastvorsprüngen 66, 69 zu versehen, die einander diametral gegenüberliegen.

Das zweite Sperrelement 63 ist spiegelsymmetrisch zum ersten Sperrelement 62 ausgebildet. Es weist einen als Sperrglied 70 ausgebildeten Mittelabschnitt auf mit einer zentralen Durchgangsöffnung 76 und Rastvorsprüngen 66, 69, und an das Sperrglied 70 schließt sich dem ersten Führungsstift 31 zugewandt ein erster Haltearm 72 und dem zweiten Führungsstift 32 zugewandt ein zweiter Haltearm 73 an. Auch die beiden Haltearme 72 und 73 sind L-förmig gebogen und weisen an ihren freien Endbereichen eine Ausschanzung auf, die von einem Führungsstift 31 bzw. 32 durchgriffen ist. An den Ausstanzungen ist das zweite Sperrelement 63 mit den Führungsstiften 31 und 32 verschweißt.

Zur Herstellung einer Rastverbindung zwischen dem Sperrglied 70 und dem Betätigungsabschnitt 17 weist dieser bei der in den Figuren 4, 5 und 6 dargestellten Ausführungsform nicht nur an seiner ersten Stirnseite 24 sondern auch an seiner zweiten Stirnseite 25 komplementär zu den Rastvorsprüngen 66 und 69 ausgestaltete Rastvertiefungen 75 auf, die jeweils mit einem Rastvorsprung 66 bzw. 69 einen Formschluss ausbilden, wenn die Spindel 14 der Dehnschraube 60 die in den Figuren 4 und 5 dargestellte Winkelstellung einnimmt. Wird die Spindel 14 aus dieser Winkelstellung verdreht, so gleiten die Rastvorsprünge aus den jeweiligen Rastvertiefungen des Betätigungsabschnitts 17 heraus und üben auf den Betätigungsabschnitt 17 von beiden Seiten jeweils eine axial ausgerichtete Federkraft aus, die die Spindel 14 der Dehnschraube 60 gegen unbeabsichtigtes Verdrehen sichert.

Zur Montage werden die beiden Sperrelemente 62, 63 jeweils ausgehend von einem Ende der Spindel 14 in axialer Richtung auf die Spindel 14 aufgeschoben, bis die Sperrelemente an den Stirnseiten 24 bzw. 25 des Betätigungsabschnitts 17 anliegen und diesen zwischen sich aufnehmen. Anschließend können die Führungsstifte 31 und 32 durch die Ausstanzungen der endseitig flächig aneinander anliegenden Sperrelemente 62 und 63 hindurchgeführt werden und mit den Sperrelementen 62, 63 verschweißt werden.

Auch die Dehnschraube 60 weist ein verhältnismäßig geringes Einbaumaß auf und dennoch kann die Spindel 14 der Dehnschraube 60 nur durch Überwinden axial einwirkender Federkräfte verdreht werden.

## Patentansprüche

1. Dehnschaube zur Zahnregulierung mit zwei Dehnschraubenkörpern, deren gegenseitiger Abstand mittels einer Spindel veränderbar ist, und mit mindestens einem parallel zur Spindel ausgerichteten Führungsstift, der in Führungsöffnungen der beiden Dehnschraubenkörper eingreift, wobei die Spindel einen ersten und einen zweiten Gewindeabschnitt aufweist, die jeweils mit einem Dehnschraubenkörper verbunden sind, sowie einen Betätigungsabschnitt mit mindestens einer Ansetzstelle für ein Werkzeug zum Drehen der Spindel, und wobei die Dehnschraube einen Sperrmechanismus aufweist, der mit dem Betätigungsabschnitt zusammenwirkt zur Sicherung der Spinnel gegen unbeabsichtigtes Verdrehen, wobei der Sperrmechanismus (40; 61) mindestens ein Sperrelement (41; 62, 63) aufweist mit einem seitlich neben dem Betätigungsabschnitt (17) angeordneten Sperrglied (42; 65, 70), das den Betätigungsabschnitt (17) beim Verdrehen der Spindel (14) mit einer Federkraft beaufschlagt, **dadurch gekennzeichnet, dass** die beim Verdrehen der Spindel beaufschlagte Federkraft axial ausgerichtet ist.

2. Dehnschraube nach Anspruch 1, wobei das Sperrglied (42; 65, 70) mindestens ein Rastelement (43; 66, 69) aufweist, das in mindestens einer Winkelstellung der Spindel (14) mit einem an einer Stirnseite (24, 25) des Betätigungsabschnitts (17) angeordneten korrespondierenden Rastelement (44, 75) verrastbar ist.

3. Dehnschraube nach Anspruch 2, wobei an mindestens einer Stirnseite (24, 25) des Betätigungsabschnitts (17) mehrere, in gleichmäßigem Winkelabstand zueinander angeordnete Rastelemente angeordnet sind.

4. Dehnschraube nach Anspruch 2 oder 3, wobei das mindestens eine Rastelement des Sperrglieds (42; 65, 70) als Rastvorsprung (43; 66, 69) ausgestaltet ist, und dass das mindestens eine Rastelement des Betätigungsabschnitts (17) als stirnseitig angeordnete Rastvertiefung (44, 75) ausgestaltet ist, in die der Rastvorsprung (43, 66, 69) eintaucht.

5. Dehnschraube nach einem der Ansprüche 2, 3 oder 4, wobei das mindestens eine Rastelement (43; 66, 69) des Sperrglieds (42; 65, 70) mit dem mindestens einen Rastelement (44, 75) des Betätigungselements (17) einen Formschluss ausbildet.

6. Dehnschraube nach einem der voranstehenden Ansprüche, wobei das Sperrelement (41; 62, 63) aus einem Flachmaterial gefertigt ist.

7. Dehnschraube nach einem der voranstehenden Ansprüche, wobei das Sperrelement (41; 62, 63) aus Blech gefertigt ist.

8. Dehnschraube nach einem der voranstehenden Ansprüche, wobei die Spindel (14) seitlich neben dem Betätigungsabschnitt (17) eine Ringnut (27, 28) aufweist, in die das Sperrelement (41; 62, 63) eintaucht.

9. Dehnschraube nach einem der voranstehenden Ansprüche, wobei das Sperretement (41; 62, 63) einen U-förmigen oder C-förmigen Bügel aufweist, der die Spindel (14) zwischen sich aufnimmt.

10. Dehnschraube nach einem der voranstehenden Ansprüche, wobei das Sperrelement (41; 62, 63) mindestens einen vom Sperrglied (42; 65, 70) nach außen abstehenden Haltearm (46, 47; 67, 68, 72, 73) aufweist, der an einem Führungsstift (31, 32) gehalten ist.

11. Dehnschraube nach Anspruch 10, wobei der mindestens eine Haltearm eine Öffnung (54, 55) aufweist, die von einem Führungsstift (31, 32) durchgriffen ist.

12. Dehnschraube nach Anspruch 10 oder 11, wobei der mindestens eine Haltearm (46, 47; 67, 68, 72, 73) an einem Führungsstift (31, 32) axial unbeweglich fixiert ist.

13. Dehnschraube nach einem der voranstehenden Ansprüche, wobei die Dehnschraube (10, 60) zwei Führungsstifte (31, 32) aufweist, zwischen denen die Spindel (14) angeordnet ist, und dass das Sperrglied (42; 65, 70) einen Mittelabschnitt des Sperrelements (41; 62, 63) ausbildet, der an der Spindel (14) angeordnet ist und den Betätigungsabschnitt (17) beim Verdrehen der Spindel (14) mit einer axialen Federkraft beaufschlagt, und dass das Sperrelement (41; 62, 63) einander abgewandte erste und zweite Haltearme (46, 47; 67, 68, 72, 73) aufweist, die sich an den Mittelabschnitt anschließen und jeweils an einem Führungsstift (31, 32) unverlierbar gehalten sind.

14. Dehnschraube nach Anspruch 13, wobei die beiden Haltearme (46, 47; 67, 68, 72, 73) jeweils L-förmig ausgestaltet sind und einen ersten, axial ausgerichteten Schenkel (49, 50) und einen zweiten radial ausgerichteten Schenkel (51, 52) aufweisen.

15. Dehnschraube nach einem der voranstehenden Ansprüche, wobei der Sperrmechanismus (61) zwei Sperrelemente (62, 63) aufweist, deren Sperrglieder (65, 70) jeweils seitlich an einer Stirnseite (24, 25) des Betätigungsabschnitts (17) angeordnet sind und den Betätigungsabschnitt (17) beim Verdrehen der Spindel (14) jeweils mit einer axialen Federkraft beaufschlagen.

16. Dehnschraube nach Anspruch 15, wobei die beiden Sperrelemente (62, 63) den Betätigungsabschnitt (17) zwischen sich aufnehmen.

17. Dehnschraube nach Anspruch 16, wobei die Sperrelemente (62, 63) jeweils eine zentrale Durchgangsöffnung (76) aufweisen, die von der Spindel (14) durchgriffen ist, und dass die Sperrelemente (62, 63) jeweils an mindestens einem Führungsstift (31, 32) festgelegt sind.

## Claims

1. An expansion screw for regulating teeth, having two expansion-screw bodies, the spacing between which can be changed by means of a spindle, and having at least one guide pin which is aligned parallel to the spindle and engages in guide openings of the two expansion-screw bodies, the spindle having a first and a second threaded portion, each of which is connected to an expansion-screw body, and an actuating portion, with at least one point for application of a tool for rotating the spindle, and the expansion screw having a locking mechanism which interacts with the actuating portion in order to secure the spindle against unintended rotation, wherein the locking mechanism (40; 61) has at least one locking element (41; 62, 63) with a locking member (42; 65, 70) which is disposed laterally alongside the actuating portion (17) and subjects the actuating portion to a spring force when the spindle (14) is rotated, **characterized in that** the spring force subjected upon rotation of the spindle is axially aligned.

2. The expansion screw according to claim 1, wherein the locking member (42; 65, 70) has at least one latching element (43; 66, 69) which is adapted to be latched, in at least one angular position of the spindle (14), to a corresponding latching element (44, 75) disposed on an end face (24, 25) of the actuating portion (17).

3. The expansion screw according to claim 2, wherein at least one end face (24, 25) of the actuating portion (17) has disposed on it a plurality of latching elements which are spaced apart from one another at uniform angular spacings.

4. The expansion screw according to claim 2 or 3, wherein the at least one latching element of the locking member (42; 65, 70) is configured at a latching protrusion (43; 66, 69), and wherein at least one latching element of the actuating portion (17) is configured as a latching indentation (44; 75) which is disposed on an end face of the actuating portion (17) and into which the latching protrusion (43; 66, 69) penetrates.

5. The expansion screw according to one of claims 2, 3 or 4 wherein the at least one latching element (43; 66, 69) of the locking member (42; 65, 70) forms a positive lock with the at least one latching element (44; 75) of the actuating element (17).

6. The expansion screw according to one of the preceding claims, wherein the locking element (41; 62, 63) is produced from a flat material.

7. The expansion screw according to one of the preceding claims, wherein the locking element (41; 62, 63) is produced from sheet metal.

8. The expansion screw according to one of the preceding claims, wherein the spindle (14) has an annular groove (27, 28) laterally alongside the actuating portion (17), into which groove the locking element (41; 62, 63) penetrates.

9. The expansion screw according to one of the preceding claims, wherein the locking element (41; 62, 63) has a U-shaped or C-shaped bracket which accommodates the spindle (14).

10. The expansion screw according to one of the preceding claims, wherein the locking element (41; 62, 63) has at least one retaining arm (46, 47; 67, 68, 72, 73) which projects outward from the locking member (42; 65, 70) and is retained on a guide pin (31, 32).

11. The expansion screw according to claim 10, wherein the at least one retaining arm has an opening (54, 55) through which a guide pin (31, 32) engages.

12. The expansion screw according to claim 10 or 11, wherein the at least one retaining arm (46, 47; 67, 68, 72, 73) is fixed in an axially immovable manner on a guide pin (31, 32).

13. The expansion screw according to one of the preceding claims, wherein the expansion screw (10; 60) has two guide pins (31, 32), between which the spindle (14) is disposed, and wherein the locking member (42; 65, 70) forms a central portion of the locking element (41; 62, 63), and this central portion is disposed on the spindle (14) and subjects the actuating portion (17) to an axial spring force when the spindle (14) is rotated, and wherein the locking element (41; 62, 63) has first and second retaining arms (46, 47; 67, 68, 72, 73) which are directed away from one another, adjoin the central portion and are each retained in captive fashion on a guide pin (31, 32).

14. The expansion screw according to claim 13, wherein the two retaining arms (46, 47; 67, 68, 72, 73) are each of L-shaped configuration and have a first, axially oriented portion (49, 50) and a second, radially oriented portion (51, 52).

15. The expansion screw according to any one of the preceding claims, wherein the locking mechanism (61) has two locking elements (62, 63), the locking members (65, 70) of which are each disposed laterally at an end face (24, 25) of the actuating portion (17) and subject the actuating portion (17) to an axial spring force in each case when the spindle (14) is rotated.

16. The expansion screw according to claim 15, wherein the two locking elements (62, 63) accommodate the actuating portion (17) between them.

17. The expansion screw according to claim 16, wherein the locking elements (62, 63) each have a central through-passage opening (76) through which the spindle (14) engages, and wherein the locking elements (62, 63) are each secured on at least one guide pin (31, 32).

## Revendications

1. Vis d'expansion pour la correction dentaire présentant deux corps de vis d'expansion, dont l'espacement peut être modifié à l'aide d'une broche, et avec au moins une tige de guidage disposée parallèlement à la broche, laquelle s'engage dans des ouvertures de guidage des deux corps de vis d'expansion, la broche présentant un premier et un deuxième segments filetés reliés chacun à un corps de vis d'expansion, ainsi qu'un segment de manoeuvre avec au moins un point d'appui pour un outil pour la rotation de la broche, et la vis d'expansion pré-sentant un mécanisme de blocage qui coopère avec le segment de manoeuvre pour immobiliser la broche contre une rotation accidentelle, le mécanisme de blo-cage (40 ; 61) comportant au moins un élément de blocage (41 ; 62, 63) avec un patin de blocage (42 ; 65, 70) disposé latéralement à côté du segment de manoeuvre (17) qui contraint le segment de manoeuvre (17) avec une force de ressort lors de la rotation de la broche (14), **caractérisée en ce que** la force de ressort appli-quée lors de la rotation de la broche est orientée axialement.

2. Vis d'expansion selon la revendication 1, dans laquelle le patin de blocage (42 ; 65, 70) comporte au moins un élément d'enclenchement (43 ; 66, 69), lequel est enclenchable avec un élément d'enclenchement (44, 75) correspondant prévu sur une face frontale (24, 25) du segment de manoeuvre (17) dans au moins une posi-tion angulaire de la broche (14).

3. Vis d'expansion selon la revendication 2, dans laquelle plusieurs éléments d'enclenchement disposés à inter-valle angulaire régulier sont prévus sur au moins une face frontale (24, 25) du segment de manoeuvre (17).

4. Vis d'expansion selon la revendication 2 ou 3, dans laquelle le ou les éléments d'enclenchement du patin de blocage (42 ; 65, 70) sont réalisés sous forme de saillie d'enclenchement (43 ; 66, 69), et en ce que le ou les éléments d'enclenchement du segment de manoeuvre (17) sont réalisés sous forme d'évidement d'enclenche-ment (44, 75) disposé frontalement et dans lequel s'engage la saillie d'enclenchement (43, 66, 69).

5. Vis d'expansion selon l'une des revendications 2, 3 ou 4, dans laquelle le ou les éléments d'enclenchement (43 ; 66, 69) du patin de blocage (42 ; 65, 70) s'accou-plent par correspondance de forme avec le ou les éléments d'enclenchement (44, 75) du segment de manoeuvre (17).

6. Vis d'expansion selon l'une des revendications précé-dentes, dans laquelle l'élément de blocage (41 ; 62, 63) est fabriqué dans un matériau plat.

7. Vis d'expansion selon l'une des revendications précé-dentes, dans laquelle l'élément de blocage (41 ; 62, 63) est fabriqué en tôle.

8. Vis d'expansion selon l'une des revendications précé-dentes, dans laquelle la broche (14) présente une rainure annulaire (27, 28) disposée latéralement à côté du segment de manoeuvre (17) et dans laquelle s'engage l'élément de blocage (41 ; 62, 63).

9. Vis d'expansion selon l'une des revendications précé-dentes, dans laquelle l'élément de blocage (41 ; 62, 63) présente un étrier en forme de U ou de C, lequel enserre la broche (14).

10. Vis d'expansion selon l'une des revendications précé-dentes, dans laquelle l'élément de blocage (41 ; 62, 63) comprend au moins un bras de maintien (46, 47 ; 67, 68, 72, 73) qui s'étend vers l'extérieur depuis le patin de blocage (42 ; 65, 70) et qui est maintenu sur une tige de guidage (31, 32).

11. Vis d'expansion selon la revendication 10, dans laquelle le ou les bras de maintien présentent une ouverture (54, 55) à travers dans laquelle passe une tige de guidage (31, 32).

12. Vis d'expansion selon la revendication 10 ou 11, dans laquelle le ou les bras de maintien (46, 47 ; 67, 68, 72, 73) sont fixés à une tige de guidage (31, 32) de manière à être immobilisés dans le sens axial.

13. Vis d'expansion selon l'une des revendications précé-dentes, dans laquelle ladite vis d'expansion (10, 60) présente deux tiges de guidage (31, 32) entre lesquelles est disposé la broche (14), et dans laquelle le patin de blocage (42 ; 65, 70) forme un segment central de l'élément de blocage (41 ; 62, 63) disposé sur la broche (14) et qui contraint le segment de manoeuvre (17) avec une force de ressort axiale lors de la rotation de la broche (14), et dans laquelle l'élément de blocage (41 ; 62, 63) présente un premier et un deuxième bras de maintien (46, 47 ; 67, 68, 72, 73) détournés l'un de l'autre, adjacents au segment central et maintenus chacun de manière imperdable sur une tige de guidage (31, 32).

14. Vis d'expansion selon la revendication 13, dans laquelle les deux bras de maintien (46, 47 ; 67, 68, 72, 73) sont en forme de L et présentent une première aile (49, 50) s'étendant dans le sens axial et une deuxième aile (51, 52) s'étendant dans le sens radial.

15. Vis d'expansion selon l'une des revendications précé-dentes, dans laquelle le mécanisme de blocage (61) présente deux éléments de blocage (62, 63) dont les patins de blocage (65, 70) sont disposés chacun latéralement sur une face frontale (24, 25) du segment de manoeuvre (17) et contraignent le segment de manoeuvre (17) avec une force de ressort axiale lors de la rotation de la broche (14).

16. Vis d'expansion selon la revendication 15, dans laquelle les deux éléments de blocage (62, 63) enserrent le seg-ment de manoeuvre (17).

17. Vis d'expansion selon la revendication 16, dans laquelle les éléments de blocage (62, 63) présentent chacun une ouverture de traversée (76) centrale par dans laquelle passe la broche (14), et dans laquelle les éléments de blocage (62, 63) sont fixés chacun sur au moins une tige de guidage (31, 32).
